Europäisches Patentamt

European Patent Office

Office européen des brevets

(11) Veröffentlichungsnummer: **0 255 568**
A2

# EUROPÄISCHE PATENTANMELDUNG

(21) Anmeldenummer: **87103519.2**

(22) Anmeldetag: **11.03.87**

(51) Int. Cl.⁴: **H 01 M 2/10**

(30) Priorität: **25.07.86 DE 3625135**

(43) Veröffentlichungstag der Anmeldung: **10.02.88**
Patentblatt **88/6**

(84) Benannte Vertragsstaaten: **CH DE GB IT LI NL**

(71) Anmelder: **Licentia Patent-Verwaltungs-GmbH,
Theodor-Stern-Kai 1, D-6000 Frankfurt/Main 70 (DE)**

(72) Erfinder: **Kluck, Jens, Dipl.-Ing.,
August-Lämmle-Strasse 15, D-7100 Heilbronn (DE)**

(74) Vertreter: **Wolf, Otto, Dr. Ing. et al, Licentia
Patent-Verwaltungs-GmbH Theodor-Stern-Kai 1,
D-6000 Frankfurt 70 (DE)**

(54) Mit einem elektrischen Gerät vereinigbarer Batterieblock.

(57) Es wird ein mit elektrischen Geräten vereinigbares Batterieblocksystem vorgeschlagen, das es ermöglicht, mit einer nur geringen Anzahl von Batterieblöcken eine optimale Zahl von Geräten zu bestücken.

Zu diesem Zweck sieht die Erfindung vor, das Einschubteil (1) einer Anzahl für gleiche Batteriespannung, jedoch unterschiedlicher Batteriekapazität ausgelegter Batterieblöcke unabhängig von der jeweiligen Batteriekapazität stets gleich lang zu bemessen und den Batterieaufnahmeteil (2) so auszugestalten, dass es zur Anlage an eine Kontur des Gerätes kommt und an diesem arretierbar ist (Fig. 5).

Die Erfindung betrifft einen mit einem elektrischen Gerät vereinigbaren Batterieblock nach dem Oberbegriff des Patentanspruches 1.

Durch die EP-Anmeldung 00 71 356 ist ein derartiger Batterieblock (Batterie-Pack) in Anwendung bei einem Elektrowerkzeug, in diesem Fall bei einer Bohrmaschine, bekannt. Zu diesem Zweck ist der Handgriff der Bohrmaschine als Hohlraum für die Aufnahme eines Batterieblocks ausgebildet, der in seiner Einschublage durch ein schwenkbar an der Unterseite der Wandung des Bohrmaschinenhandgriffs gelagertes Verriegelungsglied gehalten wird.

Derartige Batterieblöcke werden hinsichtlich der Spannung und der Kapazität dem jeweiligen Bedarfsfall entsprechend ausgelegt, wobei auch die bei dem betreffendem Gerät gegebenen Platzverhältnisse zu berücksichtigen sind. Dadurch bedingt ergibt sich eine Vielzahl verschiedener Batterieblöcke. Dies ist wenig rationell und ferner auch kostspielig.

Der Erfindung liegt die Aufgabe zugrunde, ein Batterieblocksystem zu schaffen, das es ermöglicht, mit einer Geringstzahl von Batterieblöcken eine optimale Gerätezahl leistungsgerecht zu bestücken.

Diese Aufgabe ist erfindungsgemäß dadurch gelöst, daß das Einschubteil einer Anzahl für gleiche Batteriespannung, jedoch unterschiedliche Batteriekapazität ausgelegter Batterieblöcke unabhängig von der jeweiligen Batteriekapazität stets dieselbe axiale Erstreckung aufweist und der Batterieaufnahmeteil des jeweiligen Batterieblockes zur Anlage an eine Kontur des Gerätes kommt und an diesem arretierbar ist.

Weiterbildungen und zweckmäßige Ausgestaltungen der Erfindung sind in den Unteransprüchen gekennzeichnet.

Die Erfindung wird im nachstehenden anhand einiger beispielsweiser Ausführungsformen von Batterieblöcken erläutert.

- 2 -

Es zeigen: Fig. 1 bis 3: drei Batterieblöcke mit einer Spannung von jeweils 12 Volt und für drei verschiedene Kapazitäten 1,2 Ah, 4 Ah und 7 Ah in Seitenansicht,

Fig. 4 bis 6: zugehörige Ansichten der Batterieblöcke gemäß den Figuren 1 bis 3 in Richtung A 1,

Fig. 7 bis 9: drei Batterieblöcke mit einer Spannung von jeweils 7,2 Volt und für die drei verschiedenen Kapazitäten 1,2 Ah, 4 Ah und 7 Ah in Seitenansicht,

Fig. 10 bis 12: zugehörige Ansichten der Batterieblöcke nach den Figuren 7 bis 9 in Richtung A 2,

Fig. 13 bis 15: drei Batterieblöcke mit einer Spannung von jeweils 2,4 Volt und für drei verschiedene Kapazitäten 1,2 Ah, 4 Ah und 7 Ah in Seitenansicht,

Fig. 16 bis 18: zugehörige Ansichten der Batterieblöcke gemäß den Figuren 13 bis 15 in Richtung A 3,

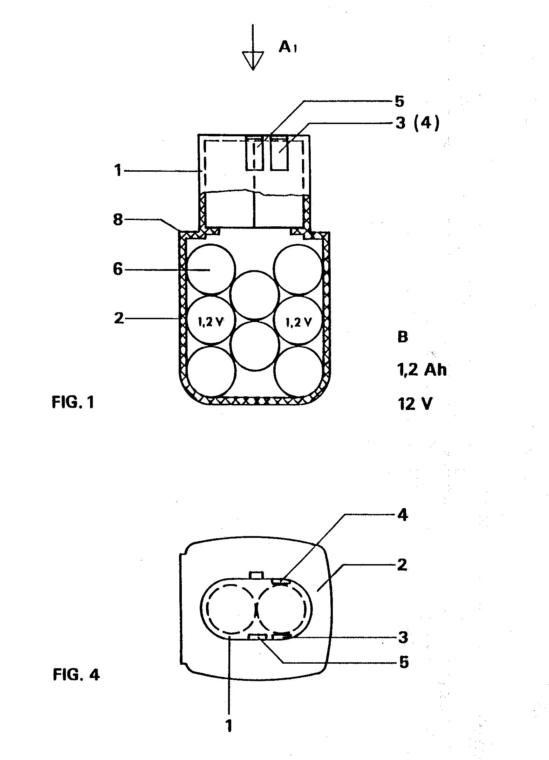

Wie aus den Figuren 1 bis 6 ersichtlich ist, besteht jeder der drei Batterieblöcke B1, B2 und B3 aus einem Einschubteil 1 und einem Batterieaufnahmeteil 2. Das Einschubteil enthält die Anschlußkontakte 3, 4 (-, +) für den nicht dargestellten Antrieb des betreffenden Geräts, z. B. für den Antriebsmotor eines Elektrowerkzeugs. Der mit 5 bezeichnete Kontakt ist ein Kontakt für den Anschluß eines NTC oder PTC Widerstandes, der in bekannter Weise zur Steuerung des Ladevorganges beim Aufladen des jeweiligen Batterieblocks dient.

Die Batterieblöcke B1 bis B3 sind jeweils Kompakteinheiten, die nicht unbedingt das Auswechseln einzelner Batteriezellen ermöglichen müssen, sondern in der Regel jeweils als Einheit auswechselbar sind.

Im Batterieaufnahmeteil 2 sind hier jeweils zehn Zellen 6 zu jeweils 1,2 Volt untergebracht, so daß jeder Batterieblock eine Spannung von 12 Volt aufweist. Die Kapazitäten der einzelnen Batterieblöcke B1, B2 und B3 sind verschieden. Im vorliegenden Fall betragen sie 1,2 Ah, 4 Ah und 7 Ah. Dementsprechend sind auch die einzelnen 1,2 Volt Zellen dimensioniert, so daß die Batterieaufnahmeteile 2 jeweils unterschiedlich große Volumenkörper sind.

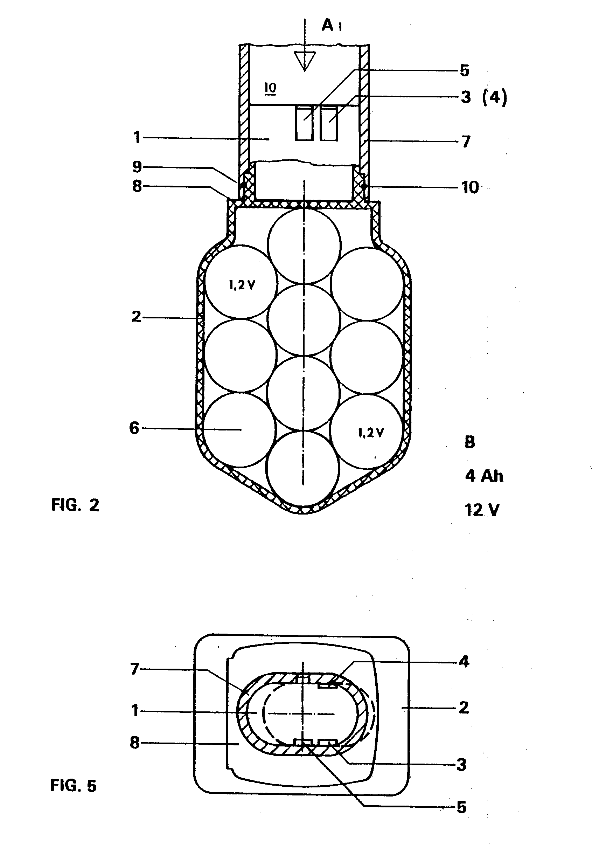

Die axial jeweils gleichlang bemessenen Einschubteile 1 weisen, wie aus den Figuren 4 bis 6 ersichtlich ist, auch dieselbe Querschnittsform auf, die rechteckförmig oder ähnlich gestaltet sein kann. Die Vereinigung der einzelnen Batterieblöcke mit dem hierfür vorgesehenen, eine entsprechende Ausnehmung aufweisenden Gehäuseteil des betreffenden Geräts, z. B. mit dem wenigstens zum Teil hohl ausgebildeten Handgriff 7 eines Elektrowerkzeugs, kann auf irgendeine zweckmäßige Weise erfolgen, z. B. durch einen Schnappverschluß , einen Klemmverschluß oder dergleichen. Dabei kommt der jeweilige Batterieblock mit seinen Oberkanten 8 zur Anlage an das betreffende Geräteteil. Beim Ausführungsbeispiel gemäß Figur 2 ist ein den Teil eines Klemmverschlusses bildender Ring 9 angedeutet, der in eine Ausnehmung 10 im Handgriff 7 des Elektrowerkzeuges eingreift.

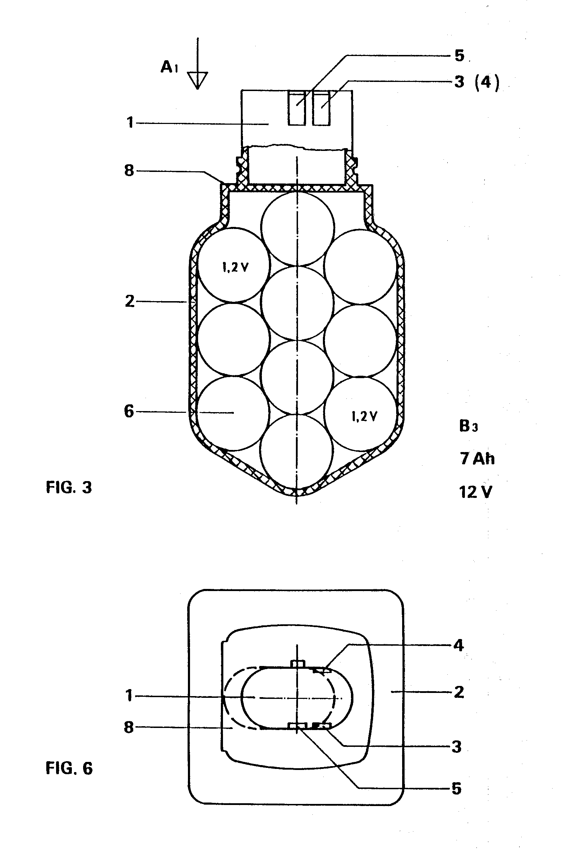

Der Batterieblock braucht nicht symmetrisch ausgebildet zu sein. Das Einschubteil 1 und der Batterieaufnahmeteil 2 können auch seitlich zueinander versetzt liegen, wie dies in den Figuren 5 und 6 bezüglich des Einschubteils gestrichelt angedeutet ist.

Es ist ersichtlich, daß einem derartigen Batterieblocksystem eine Reihe von Vorteilen immament ist. So kann ein und dasselbe Gerät mit Batterieblöcken gleicher Spannung und jeweils verschiedener Kapazität bestückt werden, wodurch es möglich ist, jeweils nur soviel Batteriekapazität und damit auch nur soviel Gewicht aufzuwenden, wie es für das Arbeitsergebnis erforderlich ist. Anderseits können für unterschidiche Leistung ausgelegte Geräte mit dem jeweils geeigneten Batterieblock bestückt werden. Des weiteren ist die Voraussetzung gegeben, daß jeweils die optimale Kombination Gerät bzw. Werkzeug, Batterieblock und Ladegerät gewählt werden kann.

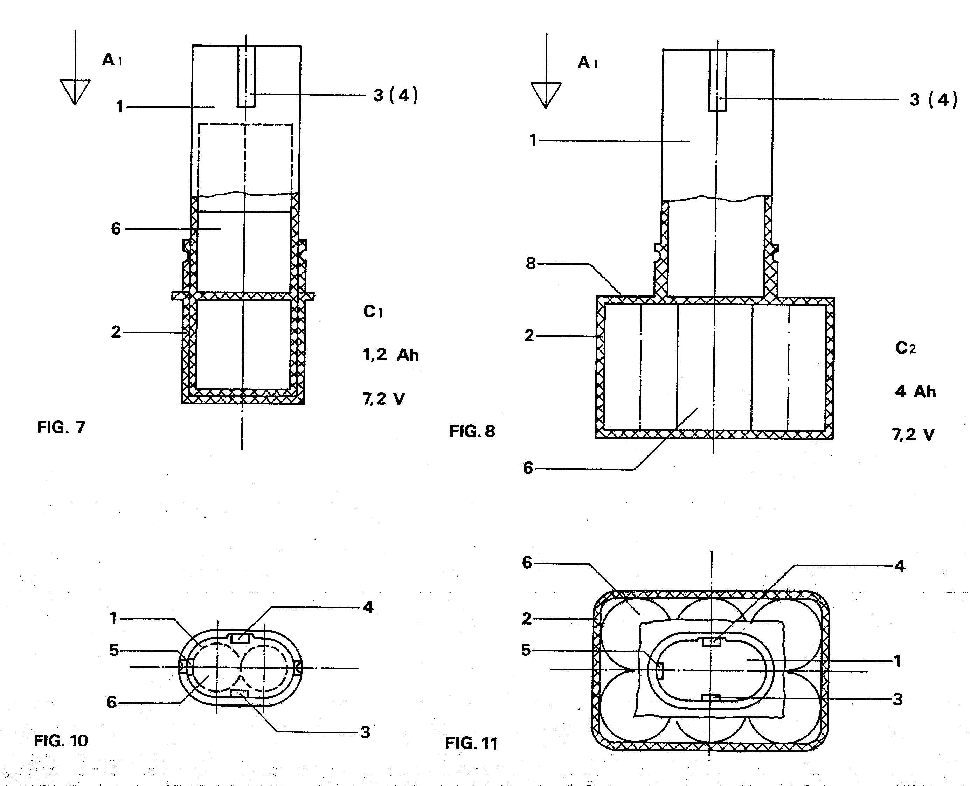

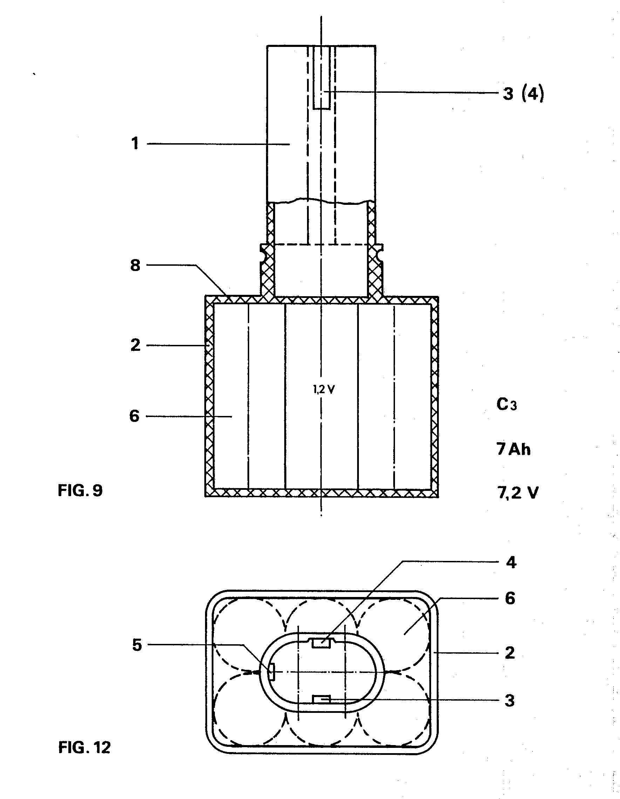

Die Batterieblöcke C1, C2 und C3 gemäß den Figuren 7 bis 12 sind jeweils für eine Spannung von 7,2 Volt ausgelegt, so daß in jedem Aufnahmeteil 2 sechs Zellen 6 zu je 1,2 Volt untergebracht sind. Die Kapazitäten der einzelnen Batterieblöcke betragen auch hier 1,2 Ah, 4 Ah und 7 Ah. Dementsprechend weisen die Aufnahmeteile der einzelnen Blöcke verschiedene Volumina und unterschiedliches Gewicht auf. Die Einschubteile 1 der drei Batterieblöcke sind geometrisch gleich ausgebildet bzw. dimensioniert . Im Falle des Batterieblocks C1 (siehe Figuren 7 und 10) befinden sich im Inneren des Einschubteils 1 vier Zellen 6 und im Aufnahmeteil 2 zwei., wogegen bei den Batterieblöcken C2 und und C3 nach den Figuren 8,11,9,12 sämtliche Zellen im Aufnahmeteil 2 untergebracht sind. Die Arretierung der Batterieblöcke C1 bis C3 mit den betreffenden Gehäuseteilen 7 erfolgt hier auf dieselbe oder auf eine ähnliche Weise wie im Falle des Batterieblocksystems B1 bis B3 angegeben.

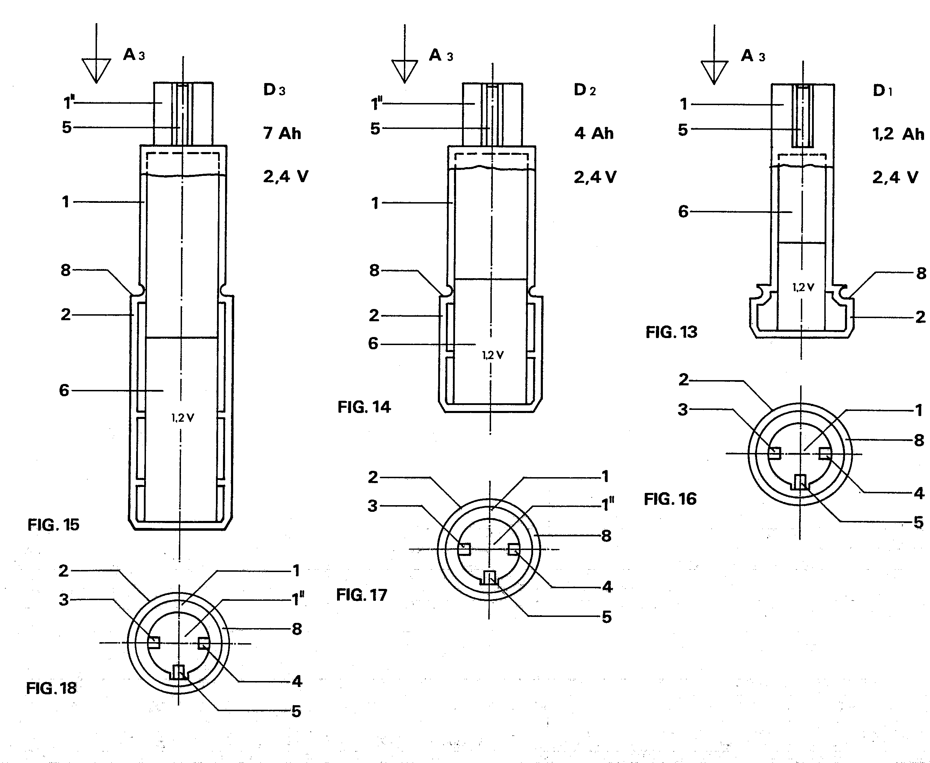

Bei den Batterieblöcken D1, D2 und D3 nach den Figuren 13 bis 18 bilden jeweils zwei 1,2 Volt-Zellen 6 die jeweilige Spannung von 2,4 Volt. Die Kapazitäten der einzelnen Batterieblöcke sind wieder 1,2 Ah, 4 Ah und 7 Ah. Das Einschubteil 1' des Batterieblocks D 1 mit 1,2 Ah weicht hier von den denjenigen der Batterieblöcke D 2 und D 3 mit 4 und 7 Ah insoweit ab, als sein Querschnitt demjenigen des Abschnitts 1''. mit den Anschlußkontakten 3,4 und 5 entspricht, wogegen die entsprechenden Querschnitte der beiden Einschubteile 1 der anderen Batterieblöcke D 2 und D 3 etwas größer bemessen sind. Der Batterieblock D 1 mit 1,2 Ah weist daher eine entsprechend breit bemessenes Batterieaufnahmeteil 2' (Arretierkappe) auf.

Dadurch, daß nach der Erfindung jeweils einer Spannung mehrere Batteriekapazitätsstufen (z. B. 1,2 Ah, 4 Ah und 7 Ah) zugeordnet sind, kann die Anzahl verschiedener Batteriespannungen insgesamt gesehen klein gehalten werden.

00255568

P a t e n t a n s p r ü c h e

1. Mit einem elektrischen Gerät, insbesondere mit einem Elektrowerkzeug durch Einschieben in eine im Gerät vorgesehene Ausnehmung vereinigbarer Batterieblock mit am Einschubteil angebrachten Anschlußkontakten für die Speisung des Geräteantriebs, dadurch gekennzeichnet, daß das Einschubteil (1) einer Anzahl für gleiche Batteriespannung , jedoch unterschiedlicher Batteriekapazität ausgelegter Batterieblöcke unabhängig von der jeweiligen Batteriekapazität stets dieselbe axiale Erstreckung aufweist und der Batterieaufnahmeteil (2) des jeweiligen Batterieblockes zur Anlage an eine Kontur des Gerätes kommt und an diesem arretierbar ist.

2. Batterieblock nach Anspruch 1, dadurch gekennzeichnet, daß das Einschubteil (1) der Batterieblöcke gleicher Spannung und unterschiedlicher Kapazität geometrisch jeweils gleich ausgestaltet ist.

3. Batterieblock nach Anspruch 1, dadurch gekennzeichnet, daß wenigstens für zwei verschiedene Spannungen ausgelegte und je Spannung zwei verschiedene Kapazitäten aufweisende Batterieblöcke vorgesehen sind.

4. Batterieblock nach dem Ansprüchen 1 bis 2, dadurch gekennzeichnet, daß das Einschubteil des Batterieblockes für die kleinste Spannung und die geringste Kapazität einen kleineren Querschnitt besitzt als die Einschubteile der für die gleiche Spannung ausgelegten, jedoch eine größere Kapazität aufweisenden Batterieblöcke.

00255568

5. Batterieblock nach einem der vorhergehenden Ansprüche, dadurch gekennzeichnet, daß das Einschubteil (1) der verschiedenen Batterieblöcke außermittig zum Batterieaufnahmeteil (2) angeordnet ist.

6. Batterieblock nach einem der vorhergehenden Ansprüche, gekennzeichnet durch seine Auslegung für 2,4 Volt und für 1,2 Ah, 4 Ah und 7 Ah.

7. Batterieblock nach einem der vorhergehenden Ansprüche, gekennzeichnet durch seine Auslegung für 7,2 Volt und für 1,2 Ah, 4 Ah und 7 Ah.

8. Batterieblock nach einem der vorhergehenden Ansprüche, gekennzeichnet durch seine Auslegung für 12 Volt und für 1,2 Ah, 4 Ah und 7 Ah.

9. Batterieblock nach einem der vorhergehenden Ansprüche, dadurch gekennzeichnet, daß der jeweilige Batterieblock mittels eines Schnappverschlusses oder dgl. lösbar mit dem Gerätegehäuse vereinigbar ist.

FIG. 1

FIG. 4

A

10

5

3 (4)

1

7

9

8

10

1,2 V

2

6

1,2 V

B

4 Ah

12 V

**FIG. 2**

7

4

1

2

8

3

5

**FIG. 5**

A₁

5

3 (4)

1

8

2

1,2 V

6

1,2 V

**B₃**

**7 Ah**

**12 V**

**FIG. 3**

4

1

2

8

3

5

**FIG. 6**

FIG. 7

3 ( 4 )

1

6

2

$C_1$

1,2 Ah

7,2 V

FIG. 8

$A_1$

3 ( 4 )

1

8

2

6

$C_2$

4 Ah

7,2 V

FIG. 10

1

4

5

6

3

FIG. 11

6

4

2

5

1

3

1,2 V

C₃

7 Ah

7,2 V

**FIG. 9**

3 (4)

1

8

2

6

**FIG. 12**

4

6

5

2

3

00255558

$D_1$ — 1,2 Ah — 2,4 V

**FIG. 13**

**FIG. 16**

$D_2$ — 4 Ah — 2,4 V

**FIG. 14**

**FIG. 17**

$D_3$ — 7 Ah — 2,4 V

**FIG. 15**

**FIG. 18**